# EUROPEAN PATENT SPECIFICATION

(11) **EP 2 683 280 B1**
(45) Date of publication and mention of the grant of the patent: **26.08.2015**
(21) Application number: 12712366.9
(22) Date of filing: 09.03.2012
(51) Int. Cl.: F24H 1/06, A47J 37/07

(54) **BARBEQUE APPARATUS**
GRILL
APPAREIL DE BARBECUE

(30) Priority: 11.03.2011 GB 201104111
(43) Date of publication of application: 15.01.2014
(73) Proprietor: Aquaformo Limited, Englefield Berkshire RG7 5ES (GB)
(72) Inventor: RHODES, Timothy Adam, Englefield, Berkshire RG7 5ES (GB); JENKINS, Karen Katrina, Englefield, Berkshire RG7 5ES (GB)
(74) Representative: Gadsden, Robert Edward
(86) International application number: PCT/IB2012/051124
(87) International publication number: WO 2012/123875

(56) References cited:
- WO-A1-03/096856
- CH-A5- 639 838
- GB-A- 2 459 687
- US-A- 2 487 605
- US-A1- 2005 121 018
- US-B1- 6 543 435

## Description

This invention relates to a portable barbecue apparatus. There are many types of barbecue apparatus, ranging from permanent garden structures such as that described in US patent 4,702,224 to those such as US patent 5,823,490 which, although able to be moved around and set up anywhere within a restricted area such as a garden, are not designed to be taken to different sites such as when camping etc. The present invention relates to a camping barbecue, and the phrase "portable barbecue" should be understood in this context.

It is known, for exemple from US 2005/0121018 A1, to provide for barbecue apparatus which can be easily assembled and disassembled for transportation. The present invention relates to this type of apparatus, but attempts to provide an improvement in flexibility and functionality. Accordingly, a portable barbecue apparatus according to claim 1 is provided.

The barbecue apparatus is modular in that any combination of cooking units can be mounted on the base unit, depending on what type of cooking is required. The user therefore does not need to assemble any units not needed for a particular activity. The option of an integral kettle unit capable of boiling water simultaneously from the same heat source means that hot drinks such as tea or coffee can be made, or hot water produced for cooking or cleaning, without the requirement for a separate kettle to be balanced on top of a fire or other heating unit.

According to a preferred arrangement, the base unit comprises a container for a combustible fuel, such as wood or charcoal. Alternatively, the base unit conceivably includes a gas burner, or a burner for some other type of fuel such as vegetable oil or bio-fuel. The cooking units typically consist of a barbecue grill, a pizza stone, and/or a smoker plate. The barbecue grill is well known in camping stoves, and allows for a variety of food to be cooked. Less well known is to be able to cook pizzas in a barbecue apparatus, but the cooking unit with the pizza stone allows for this to be an option. Finally, the smoker plate allows for smoking foods or for the regulation of oven temperatures. Each of these cooking units is in addition to the kettle unit, which allows for water to be heated for drinks and for other uses.

The cooking units are conveniently sized and shaped so as to be mounted one on top of another to form a stack of cooking units. Each of the cooking units preferably includes an interlocking edge structure such that it can be detachably assembled in combination with any other cooking unit. In this way, the user can assemble only those cooking units required for a particular occasion, in a tower which can be lower or higher depending on the number and combination of units selected. Each of the cooking units conveniently includes a locking mechanism such that it can be locked in place once assembled in combination with any other cooking unit. The locking mechanism conveniently comprises a twist lock mechanism, or alternatively a snap band mechanism. Whichever locking mechanism is employed, the cooking units can be locked in place once assembled, in order to provide a safe and secure structure, especially important when used in an outdoor environment frequently also inhabited by pets and children.

According to a preferred arrangement, each of the cooking units is similar in cross-sectional shape, such that they can be assembled into a consistent and regular structure. Each of the cooking units is preferably also similar in cross-sectional size. Conceivably, each of the cooking units is of a slightly different cross-sectional size, such that they can fit telescopically one inside another, either increasing or decreasing in diameter as the cooking units are assembled one upon another. However, while employing telescopically engageable cooking units of different diameters may assist with storage in allowing one unit to fit inside another, this same feature may restrict the freedom with which any combination of cooking units can be assembled in any order. For this reason it may be preferred to ensure that each of the cooking units has a similar shape and size, thereby preserving the freedom to assemble the units in any combination and in any order. In a particularly simple and effective arrangement, each of the cooking units is circular in cross section.

The base unit is conveniently provided with a door for access to the interior of the base unit, and preferably the cooking units are likewise provided with a door for access to the interior of the cooking unit. This allows easy access not only to the base unit for replenishing fuel, but also to the cooking units for turning food.

The kettle unit is conveniently in the form of an annulus, typically conforming to the shape and size of the base unit. The kettle unit is preferably provided with a filling hopper to assist in adding liquid to the kettle unit, and an outlet tap to allow for the dispensing of liquid from the kettle unit. Conveniently, the kettle unit includes one or more vents for allowing steam to escape from the kettle unit. The vents may simply be to avoid excessive pressure building up within the kettle unit, or may conceivably also be designed to cause steam from the kettle unit to enter the cooking unit adjacent the kettle unit, so as to allow for the adjacent cooking unit to perform steam-cooking. The kettle unit may conveniently be formed as a one-piece annular tube, or may alternatively be formed of separate pieces (such as a top-piece, bottom-piece and one or more side-pieces) secured one to another in order to constitute the kettle unit.

The barbecue apparatus conveniently includes a lid capable of being removably located on whichever of the cooking units is at the top of the barbecue apparatus. The lid may conceivably include a flue capable of channelling smoke upwardly out of the barbecue apparatus. It is possible, therefore, that the barbecue apparatus may be used under a cover, for example in the event of inclement weather.

The barbecue apparatus conveniently also includes a plurality of outriggers for use in drying objects placed thereon. These can be used as drying racks for clothing or wet towels, or for holding racks for drying plates etc. The support structure for the barbecue apparatus conveniently comprises a plurality of legs. These legs are typically removably attachable to the base unit, and may conveniently be provided with apertures through which pegs can be inserted in order to secure the legs to the ground on which the barbecue apparatus is situated. It is useful to anchor the barbecue apparatus firmly to the ground, especially when the ground may be uneven or soft.

The invention will now be further described, by way of example only, with reference to the accompanying drawings, in which:
Figures 1A, 1B, 1C & 1D are respectively perspective, plan, front and side views of a portable barbecue apparatus according to the invention,
Figures 2A, 2B, 2C & 2D are respectively perspective, plan, front and side views of a base unit forming part of the portable barbecue apparatus of Figures 1A to 1D,
Figures 3A, 3B, 3C & 3D are respectively perspective, plan, front and side views of a kettle unit forming part of the portable barbecue apparatus of Figures 1A to 1D,
Figures 4A, 4B, 4C & 4D are respectively perspective, plan, front and side views of a first cooking unit forming part of the portable barbecue apparatus of Figures 1A to 1D,
Figures 5A, 5B, 5C & 5D are respectively perspective, plan, front and side views of a second cooking unit forming part of the portable barbecue apparatus of Figures 1A to 1D,
Figures 6A, 6B, 6C & 6D are respectively perspective, plan, front and side views of a lid forming part of the portable barbecue apparatus of Figures 1A to 1D, and
Figure 7 is a perspective view of an alternative embodiment of portable barbecue apparatus according to the invention, shown with all of the doors in an open position.

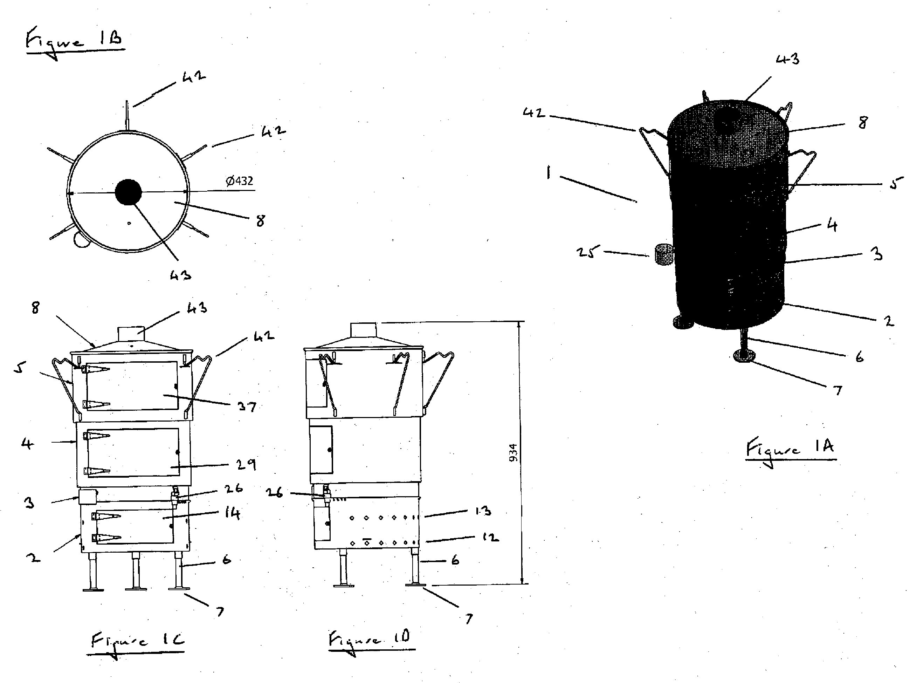

Referring to Figures 1A to 1D, a portable barbecue apparatus is shown generally at 1, and comprises a base unit 2, kettle unit 3, grill unit 4 and oven unit 5, each mounted vertically one on top of one another. The base unit 2 is supported on legs 6, with feet 7 for stabilising the barbecue unit on the ground. A lid 8 sits on top of the oven unit 5.

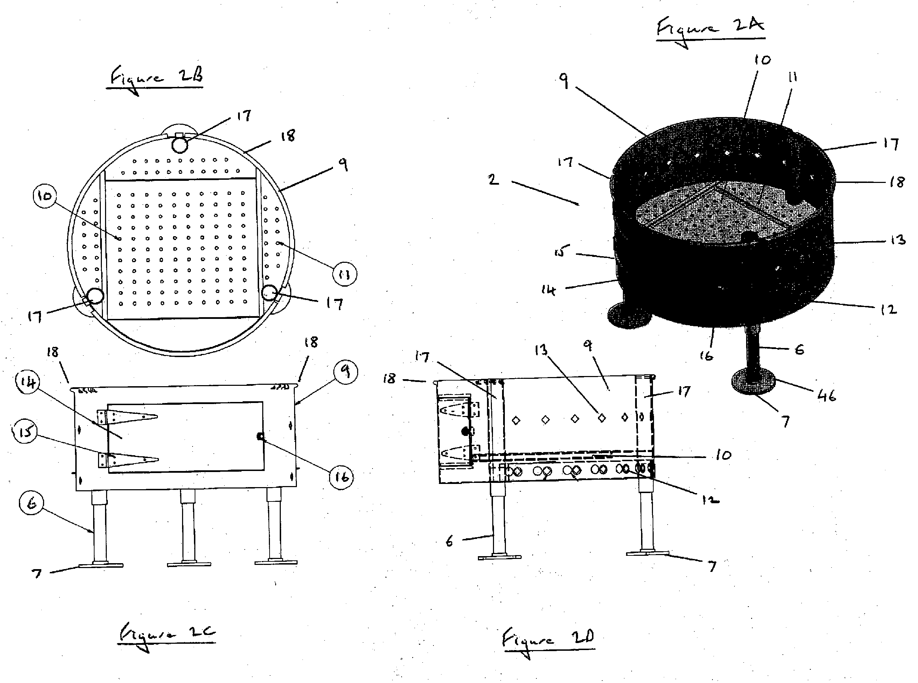

Figures 2A to 2D show the base unit 2 in more detail. The base unit comprises a cylindrical sidewall 9, and a base tray 10 on which charcoal or other combustible material can be supported and incinerated. The base tray 10 is provided with a latticework of small apertures 11, and the sidewall 9 has two rows of vents 12 & 13, one below and the other above the level of the base tray 10. The sidewall 9 is provided with a door 14, mounted on hinges 15 and able to be opened in order to allow access to the interior of the base unit 2. A lock 16 is operable to keep the door closed when required. The legs 6 are accommodated within cylindrical mounting tubes 17 attached to the inside of the sidewall 9. The legs 6 are adjustable within the mounting tubes 17 to vary the height that the legs depend below the base unit 2.

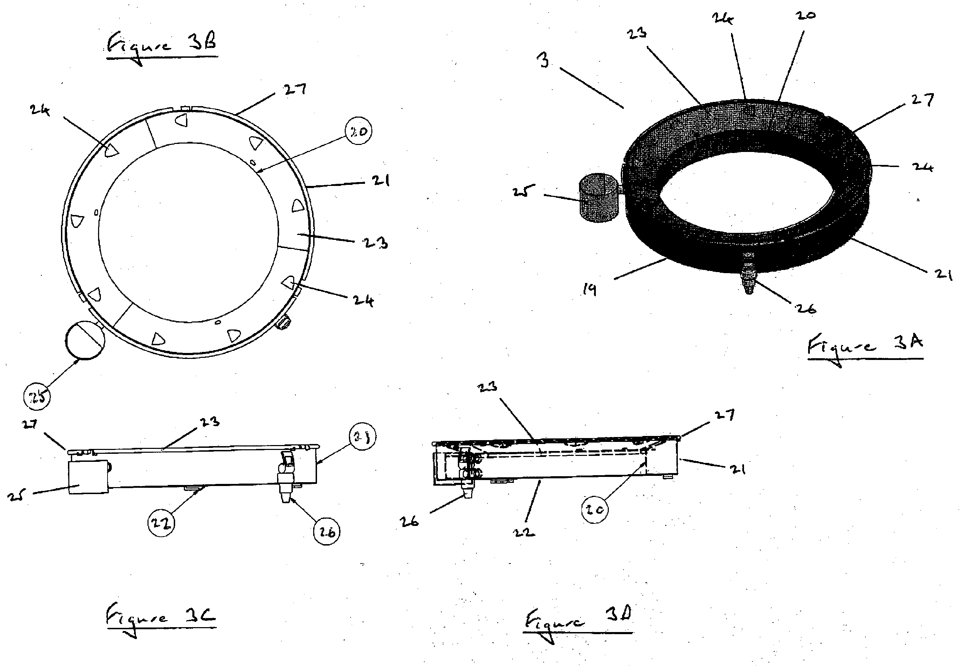

The upper edge of the sidewall 9 is provided with an outwardly recessed profile 18 so as to be able to cooperate with the lower edge 19 of the kettle unit 3, shown in more detail in Figures 3A to 3D. The kettle unit 3 comprises a closed cylindrical annulus, made up of inner and outer sidewalls 20 & 21, bottom wall 22 and top wall 23. The top wall 23 is provided with vents 24 capable of allowing steam to exit the kettle unit. The kettle unit 3 is also provided with a hopper 25 through which the kettle unit can be filled with water, and a tap 26 through which heated water can be withdrawn from the kettle unit. A locking mechanism (not shown) either in the form of a twist lock mechanism or a snap band mechanism is provided to lock the kettle unit 3 and the base unit 2 one to the other, with the lower edge 19 of the kettle unit mating inside the recessed profile of the upper edge 18 of the base unit. The upper edge 27 of the kettle unit is again outwardly recessed, so as to receive another unit such as the grill unit 4.

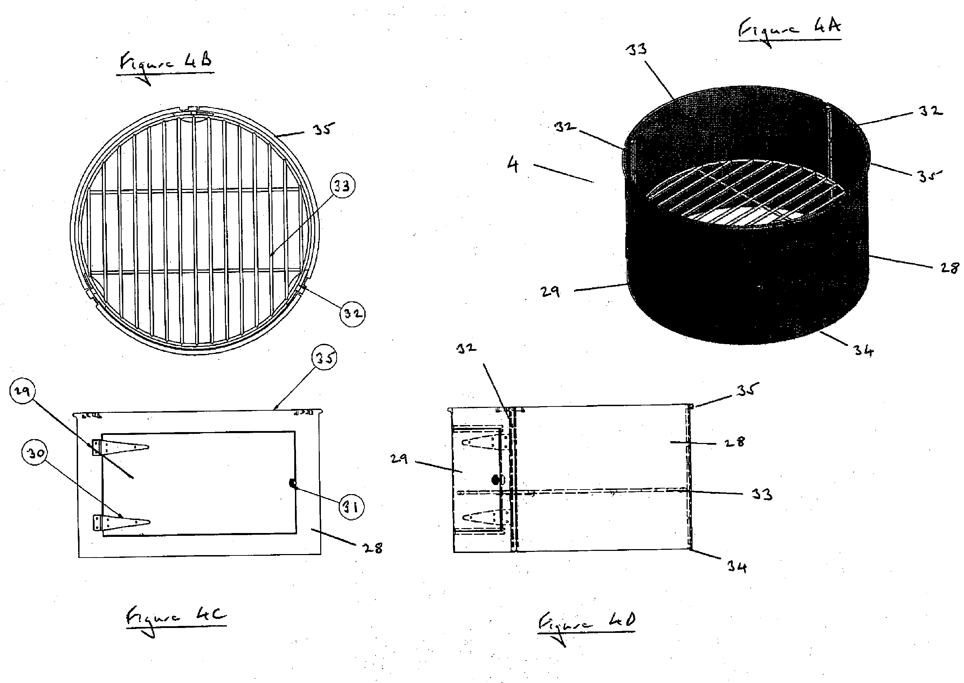

Figures 4A to 4D show the grill unit 4. The grill unit once again comprises a cylindrical sidewall 28, provided with a door 29 mounted on hinges 30 and secured by a lock 31. The interior of the sidewall 28 is provided with brackets 32 on which is mounted a grill tray 33. The brackets 32 are such that the grill tray 33 can be mounted at various vertical positions within the grill unit 4. Once again, the lower edge 34 of the grill unit is sized to locate within the outwardly recessed upper edge of the kettle unit 4, and the upper edge 35 of the grill unit is outwardly recessed so as to receive the lower edge of a further cooking unit such as the oven unit 5. Once again, locking mechanisms (not shown) are provided to lock the kettle unit 3 and the grill unit 4 one to the other, and likewise the grill unit 4 and the oven unit 5 one to the other.

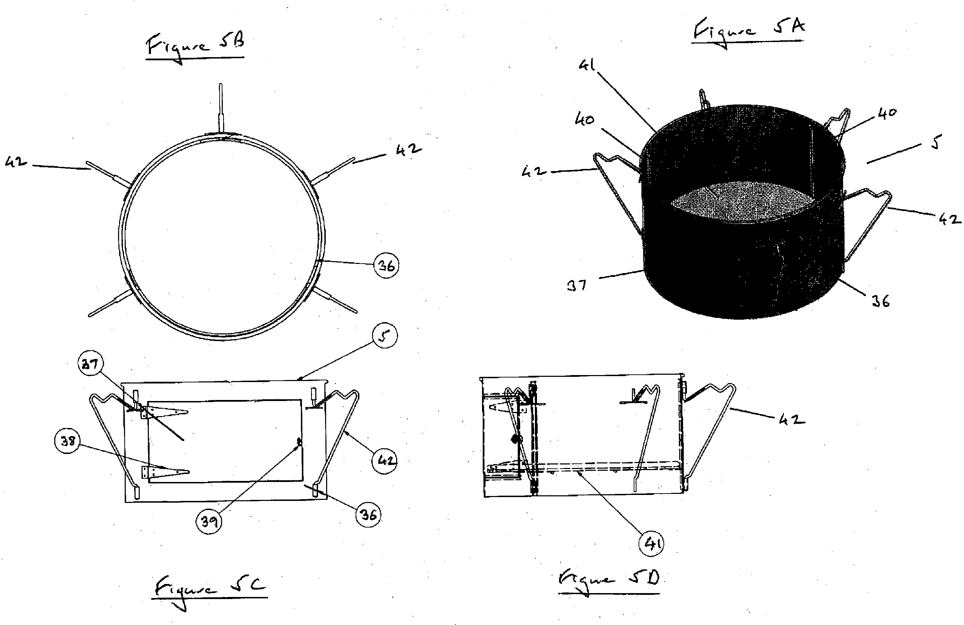

Figures 5A to 5D show the oven unit 5 in more detail. The unit 5 comprises cylindrical sidewall 36, once again provided with a door 37, hinges 38 & lock 39. The interior of the sidewall 36 has brackets 40 on which is mounted a pizza stone 41. As before, the brackets 40 are designed such that the pizza stone 41 may be mounted at different vertical levels within the oven unit 5. Outriggers 42 are attached to the outside surface of the sidewall 36, five outriggers being shown in Figures 5A & 5B. The outriggers 42 can be used to hang various items to dry, such as items of clothing, towels etc. the outriggers being heated by their association with the oven unit 5.

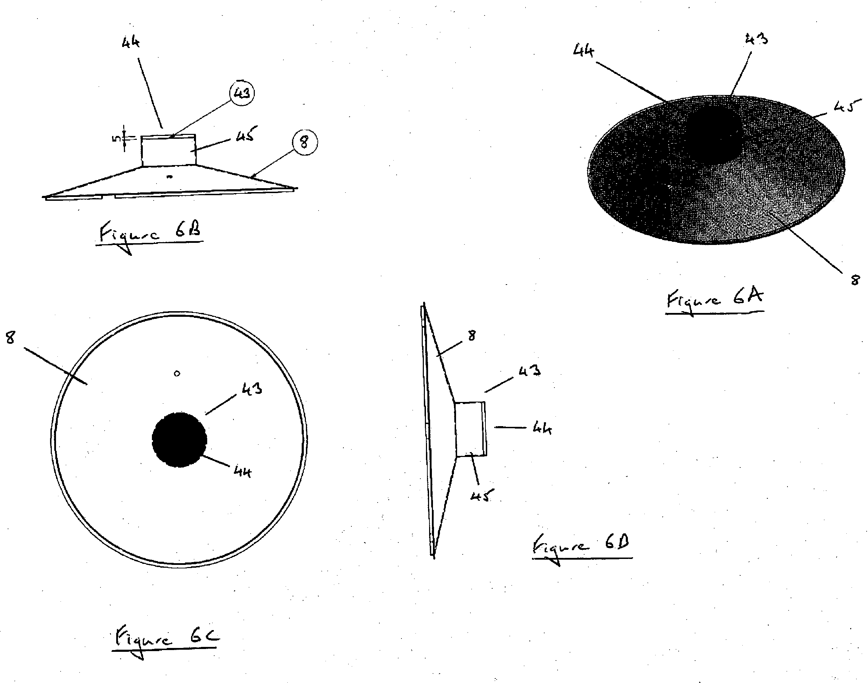

Figures 6A to 6D show the lid 8, the lid being sized to fit on top of any of the grill unit 4 or oven unit 5, whichever is uppermost. The lid is provided with a central flue 43, comprising an aperture 44 and a surrounding funnel 45. The flue 43 channels smoke out of the top of the barbecue apparatus 1.

In use, the barbecue can be assembled using the base unit 1 and any combination of the other units 3, 4 or 5. Referring back to Figure 2A, the feet 7 are provided with apertures 46 so that pegs (not shown) can be inserted therein in order to secure the feet to the ground beneath the barbecue apparatus 1. The base unit is stocked with combustible material such as wood or charcoal and lit accordingly, causing heating for whichever other units are used in combination therewith. The kettle unit 3 can be used to boil water, e.g. for tea, coffee or other hot drinks, but can also be used in combination with the grill unit 4 with the vents 24 causing stem to vent into the grill unit for steaming food placed on the grill tray 33. Alternatively, the vents can be kept mostly closed, in which case the grill unit 4 acts as a conventional barbecue grill. The oven unit can be employed in addition to the grill unit 4, or as an alternative thereto. The pizza stone 41 can be used to cook pizza or other food requiring a hot flat surface, or the pizza stone can be replaced by a smoker plate (not shown) for smoking foodstuffs placed thereon. Once cooking is completed, and the barbecue has cooled, the barbecue can be disassembled, and stowed away either for transport or until required subsequently.

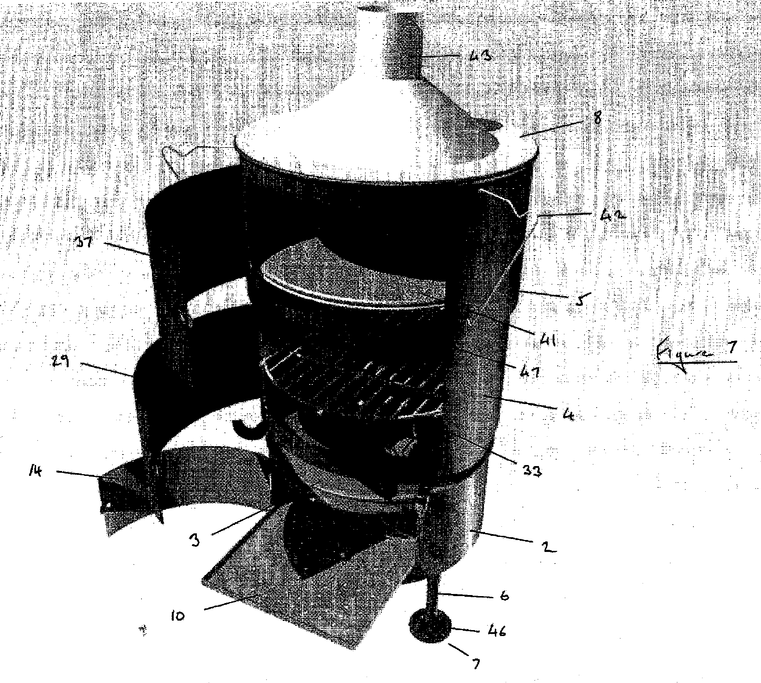

Figure 7 shows an alternative design of barbecue apparatus 1, with the base unit 2, kettle unit 3, grill unit 4 and oven unit 5 being mostly as previously described. The doors 14, 29 & 37 are shown in their open positions, so that the grill tray 33 and pizza stone 41 are clearly visible. An additional grill tray 47 is shown in the oven unit 5, and the lid 8 has a slightly different design to the one illustrated in the previous figures.

However, the most significant change in the barbecue apparatus of Figure 7 is that the diameter of the various units is not the same as is was in the previous figures. The diameter of the oven unit 5 is greater than that of the grill unit 4, and the diameter of the grill unit 4 is greater than that of the kettle unit 3 or base unit 2. In this way, when the barbecue apparatus is disassembled, the various units can fit one inside another for storage and transportation. This produces a very small profile for the barbecue apparatus in comparison with the volume achievable when assembled, something that is ideal for activities such as camping, for which the present invention is particularly suited.

The present invention provides a portable barbecue which is of modular design, and which also includes a kettle unit for producing heated water for hot drinks and for cooking and washing. It will be appreciated that aspects of the design can be changed or substituted without departing from the present invention. For example, the shape and size of the various cooking units can be changed, either for optimum storage, or for optimum versatility, with the various components being able to be used in different combinations and in a different order. The skilled man will also appreciate that other forms of heating can be employed, such as gas burners or burners of vegetable oil or other bio-fuels, without departing from the scope of the present invention. Various mechanisms for locking the components one to another can be envisaged, and it has not been necessary to describe them all here, as they will be within the knowledge of those skilled in such matters. The key aspects are the modular construction together with the water heating capability, a combination not believed to be satisfied by any construction found in the prior art within this field.

## Claims

1. A portable barbecue apparatus (1) comprising:
a base unit (2) adapted to contain a source of heat;
a support structure (6) for the base unit (2) by which the base unit (2) can be mounted outdoors for use,
a plurality of cooking units (3, 4, 5) selectively mountable on the base unit (2) for achieving different types of cooking, the user being able to attach one or more cooking units (3, 4, 5) to the base unit (2) depending on the required cooking activity, the cooking units (3, 4, 5) being sized and shaped so as to be mounted one on top of another to form a stack of cooking units (3, 4, 5),
**characterised in that** at least one of the selectively mountable cooking units (3, 4, 5) is a kettle unit (3) capable of holding and dispensing water which is heated by the source of heat until it is boiling, and the kettle unit (3) is provided with an outlet tap (26) to allow for the dispensing of water from the kettle unit (3).

2. A barbecue apparatus (1) according to claim 1, **characterised in that** the base unit (2) comprises a container (10) for a combustible fuel.

3. A barbecue apparatus (1) according to claim 1, **characterised in that** the base unit (2) includes a gas burner.

4. A barbecue apparatus (1) according to any preceding claim, **characterised in that** one of the cooking units (3, 4, 5) is a barbecue grill, a pizza stone or a smoker plate.

5. A barbecue apparatus (1) according to any preceding claim, **characterised in that** each of the cooking units (3, 4, 5) includes an interlocking edge structure such that it can be detachably assembled in combination with any other cooking unit.

6. A barbecue apparatus (1) according to any preceding claim, **characterised in that** the each of the cooking units (3, 4, 5) includes a locking mechanism such that it can be locked in place once assembled in combination with any other cooking unit.

7. A barbecue apparatus (1) according to any preceding claim, **characterised in that** each of the cooking units (3, 4, 5) is similar in cross-sectional shape.

8. A barbecue apparatus (1) according to claim 7, **characterised in that** each of the cooking units (3, 4, 5) is similar in cross-sectional size.

9. A barbecue apparatus (1) according to claim 7, **characterised in that** each of the cooking units (3, 4, 5) is of a slightly different cross-sectional size, such that they can fit telescopically one inside another.

10. A barbecue apparatus (1) according to any of claims 7 to 9, **characterised in that** each of the cooking units (3, 4, 5) is circular in cross section.

11. A barbecue apparatus (1) according to any preceding claim, **characterised in that** the kettle unit (3) is in the form of an annulus (20, 21, 22, 23).

12. A barbecue apparatus (1) according to any preceding claim, **characterised in that** the kettle unit (3) is provided with a filling hopper (25) to assist in adding liquid to the kettle unit (3).

13. A barbecue apparatus (1) according to any preceding claim, **characterised in that** the kettle unit (3) includes one or more vents (24) for allowing steam to escape from the kettle unit (3).

14. A barbecue apparatus (1) according to claim 13, **characterised in that** the one or more vents (24) are designed to cause steam from the kettle unit (3) to enter the cooking unit adjacent the kettle unit (3), so as to allow for the adjacent cooking unit to perform steam-cooking.

15. A barbecue apparatus (1) according to any preceding claim, **characterised in that** the apparatus (1) includes a plurality of outriggers (42) for use in drying objects placed thereon.

## Patentansprüche

1. Ein tragbarer Grillapparat bestehend aus:
einem Unterbau der dafür eingerichtet ist eine Hitzequelle zu fassen,
eine Tragkonstruktion für den Unterbau mit der der Unterbau im Freien aufgestellt werden kann,
mehrere Kochelemente die wahlweise auf den Unterbau montiert werden können um verschiedene Kocharten auszuführen.
Benutzer können ein einzelnes Kochelement oder mehrere gleichzeitig auf den Unterbau montieren, je nach dem welche Kochart sie ausführen möchten.
Die Kochelemente sind in Bezug auf Grösse und Form so beschaffen, dass sie aufeinander montiert werden können um einen Stapel von Kochelementen zu formen.
Es ist den Kochelementen eigen, dass zumindest eines von denen die zum Montieren ausgewählt werden ein Wasserkessel ist, der Wasser halten und abgeben kann, das an der Hitzequelle bis zum Kochen erhitzt wird.
Der Wasserkessel hat einen Auslaufhahn der es möglich macht Wasser abzulassen.

2. Ein Grillapparat wie dargestellt in Anspruch 1, der sich dadurch auszeichnet, dass der Unterbau einen Container für entflammbare Brennstoffe fasst.

3. Ein Grillapparat wie dargestellt in Anspruch 1, der sich dadurch auszeichnet, dass der Unterbau einen Gasbrenner fasst.

4. Ein Grillapparat wie dargestellt in vorausgehenden Ansprüchen, der sich dadurch auszeichnet, dass eines der Kochelemente ein Bratrost, ein Pizzastein oder zum Räuchern ist.

5. Ein Grillapparat wie dargestellt in vorausgehenden Ansprüchen, der sich dadurch auszeichnet, dass jedes der Kochelemente eine ineinandergreifende Umrandung hat, die es möglich macht das Kochelement abzunehmen und mit einem beliebigen anderen Kochelement zu montieren.

6. Ein Grillapparat wie dargstellt in vorausgehenden Ansprüchen, der sich dadurch auszeichnet, dass jedes der Kochelemente einen Verriegelungsmechanismus hat, der es erlaubt die Kocheinheit zu verrasten wenn sie in Kombination mit irgendeiner anderen Kocheinheit montiert wird.

7. Ein Grillapparat wie dargestellt in vorausgehenden Ansprüchen, der sich dadurch auszeichnet, dass jedes Kochelement eine ähnliche Querschnittsform hat.

8. Ein Grillapparat wie dargestellt in Anpruch 7, der sich dadurch auszeichnet, dass jedes Kochelement eine ähnliche Querschnittsgrösse hat.

9. Ein Grillapparat wie dargestellt in Anspruch 7, der sich dadurch auszeichnet, dass jedes Kochelement eine leicht abweichende Querschnittsgösse hat, so dass die Kochelemente teleskopartig ineinander passen.

10. Ein Grillapparat wie dargestellt in den Ansprüchen 7 bis 9, der sich dadurch auszeichnet, dass jedes Kochelement im Querschnitt rund ist.

11. Ein Grillapparat wie dargestellt in vorausgehenden Ansprüchen, der sich dadurch auszeichnet, dass das Wasserkocherteil kranzförmig ist.

12. Ein Grillapparat wie dargestellt in vorausgehenden Ansprüchen, der sich dadurch auszeichnet, dass das Wasserkocherteil einen Fülltrichter hat der hilft Flüssigkeit In den Wasserkocher zu füllen,

13. Ein Grillapparat wie dargestellt in vorausgehenden Ansprüchen, der sich dadurch auszeichnet, dass der Wasserkocher einen oder mehrere Entlüftungsöffnungen hat, durch die Dampf dem Wasserkocher entweichen kann.

14. Ein Grillapparat wie dargestellt in Anspruch 13, der sich dadurch auszeichnet, dass eine oder mehrere Entlüftungsöffnungen so entworfen sind, dass Dampf von dem Wasserkessel in das anliegende Kochelement eindringt, so dass dieses zum Dampfgarer wird.

15. Ein Grillapparat wie dargestellt in vorausgehenden Ansprüchen, der sich dadurch auszeichnet, dass der Apparat mehrere Stützen hat, die zum Trocknen von daraufgelegten Objekten verwendet werden können.

## Revendications

1. Un barbecue portable comprenant:
un bloc de base conçu pour contenir une source de chaleur
un support pour le bloc de base qui permet d'installer le bloc de base à l'extérieur
de multiples éléments pour cuisinier qui peuvent être sélectionnées et attachées au bloc de base, pour différentes activités de cuisinier
L'utilisateur peut attacher un seul où plusieurs élément en même temps au bloc de base, suivant l'activité de cuisinier désirée.
Les éléments pour cuisinier ont une forme et une taille qui permet de les assembler pour former un ensemble pour cuisinier.
Un des éléments est en général une bouilloire qui est capable de contenir et dispenser de l'eau chauffée par la source de chaleur jusqu'à ébullition.
La bouilloire a un robinet qui permet de dispenser l'eau.

2. Un barbecue comme décrit dans la revendication 1, **caractérisé par** un bloc de base comprenant un réservoir pour carburants combustibles.

3. Un barbecue comme décrit dans la revendication 1, **caractérisé par** un bloc de base contenant un brûleur à gaz.

4. Un barbecue comme décrit dans les revendications précédentes, **caractérisé par** un gril, une pierre de pizza et un est pour fumer des aliments.

5. Un barbecue comme décrit dans les revendications précédentes, **caractérisé par le fait que** chaque élément est conçu de façon a pouvoir s'enclencher ce qui permet de détacher les éléments et de les combiner avec n'importe quels autres éléments.

6. Un barbecue comme décrit dans les revendications précédentes, **caractérisé par le fait que** chaque élément a un dispositif de verrouillage qui permet d'enclencher chaque élément quand il est assemblé en combinaison avec n'importe quel autre élément.

7. Un barbecue comme décrit dans les revendications précédentes, **caractérisé par le fait que** chaque élément a une forme semblable en coupe transversale.

8. Un barbecue comme décrit dans la revendication 7, **caractérisé par le fait que** chaque élément a une taille similaire en coupe transversale.

9. Un barbecue comme décrit dans la revendication 7, **caractérisé par le fait que** chaque élément a une taille transversale légèrement différente, qui permet d'emboiter les éléments les uns aux autres.

10. Un barbecue comme décrit dans les revendications 7 a 9, **caractérisé par** une forme ronde transversale.

11. Un barbecue comme décrit dans les revendications précédentes, **caractérisé par le fait que** la bouilloire est en forme d'anneaux.

12. Un barbecue comme décrit dans les revendications précédentes, **caractérisé par le fait que** l'élément bouilloire a une trémie de remplissage qui permet d'ajouter de l'eau dans la bouilloire.

13. Un barbecue comme décrit dans les revendications précédentes, **caractérisé par le fait que** l'élément bouilloire a une ou plusieurs vannes qui laissent échapper de la vapeur.

14. Un barbecue comme décrit dans la revendication 13, **caractérisé par le fait que** une ou plusieurs vannes permettent a la vapeur de l'élément bouilloire de passer à l'élément adjacent pour une cuisson a la vapeur.

15. Un barbecue comme décrit dans les revendications précédentes, **caractérisé par le fait que** l'appareil a plusieurs poignées qui peuvent être utilisés pour mettre des objets a sécher.
